(19) Europäisches Patentamt
European Patent Office
Office européen des brevets

(11) Veröffentlichungsnummer: **0 353 225 B1**

(12) **EUROPÄISCHE PATENTSCHRIFT**

(45) Veröffentlichungstag der Patentschrift:
12.06.91 Patentblatt 91/24

(51) Int. Cl.⁵: **B60S 1/18**, F03G 7/06

(21) Anmeldenummer: **88902091.3**

(22) Anmeldetag: **04.03.88**

(86) Internationale Anmeldenummer:
**PCT/DE88/00113**

(87) Internationale Veröffentlichungsnummer:
**WO 88/07463 06.10.88 Gazette 88/22**

(54) **WISCHVORRICHTUNG FÜR SCHEIBEN VON KRAFTFAHRZEUGEN.**

(30) Priorität: 23.03.87 DE 3709476

(43) Veröffentlichungstag der Anmeldung:
07.02.90 Patentblatt 90/06

(45) Bekanntmachung des Hinweises auf die
Patenterteilung:
12.06.91 Patentblatt 91/24

(84) Benannte Vertragsstaaten:
BE DE FR GB IT SE

(56) Entgegenhaltungen:
FR-A- 2 549 978
GB-A- 1 467 971
US-A- 2 690 050
US-A- 4 466 153

(56) Entgegenhaltungen:
Patent Abstracts of Japan, vol. 11, no. 31
(E-475)(2478), 29 January 1987
Patent Abstracts of Japan, vol. 11, no. 25
(M-556)(2472), 23 January 1987
Patent Abstracts of Japan, vol. 11, no. 78
(M-570)(2525), 10 March 1987
Patent Abstracts of Japan, vol. 9, no. 326
(M-441)(2049), 21 December 1985
Patent Abstracts of Japan, vol. 10, no. 170
(E-412)(2226), 17 June 1986

(73) Patentinhaber: ROBERT BOSCH GmbH
Postfach 10 60 50
W-7000 Stuttgart 10 (DE)

(72) Erfinder: KÜHBAUCH, Gerd
Butzengrabenweg 6
W-7582 Bühlertal (DE)

EP 0 353 225 B1

# Beschreibung

## Stand der Technik

Die Erfindung geht aus von einer Wischvorrichtung nach der Gattung des Hauptanspruchs. Es ist schon eine Wischvorrichtung bekannt (US-A 44 66 153), bei der das Antriebsaggregat, neben einer eine Drehbewegung abgebenden Antriebseinheit, ein Pendelgetriebe aufweist, welches die Drehbewegung in eine für das Wischelement zweckmäßige Pendelbewegung umformt. Derartige Wischvorrichtungen sind relativ kompliziert aufgebaut und haben mehrere Gelenke, welche während des Betriebs der Wischvorrichtung verschleißen. Bei schon geringem Gelenkspiel sind unerwünschte Klappergeräusche unvermeidbar

Zur Überführung des Wischelements aus seiner einen Pendelumkehrlage in eine außerhalb des Wischfelds liegende Ablagestellung wird bei der bekannten Wischvorrichtung ein Gelenk des Pendelgetriebes mittels eines zusätzlichen Elektromotors so verstellt, daß das Wischelement die Zusatzbewegung bis zur Ablagestellung ausführt. Diese zuverlässige Lösung ist jedoch recht aufwendig.

## Vorteile der Erfindung

Die erfindungsgemäße Wischvorrichtung mit den kennzeichnenden Merkmalen des Hauptanspruchs hat demmgegenüber den Vorteil, daß die erforderliche Bewegung des Wischelements alleine durch eine Temperaturänderung des zum Antriebsaggregat gehörenden Bauteils erreicht wird, bei welcher weder Geräusche noch ein wesentlicher Verschleiß an der Wischvorrichtung auftreten. Dabei ist es gleichgültig, ob es sich um die Arbeitsbewegung handelt oder ob das Wischelement aus seiner einen Pendelumkehrlage in eine außerhalb des Wischfelds befindliche Ablagestellung gebracht werden soll. Bei der erfindungsgemäßen Wischvorrichtung ist es sogar möglich, beide Bewegungen mit Hilfe eines solchen Bauteils auszuführen.

Durch die in den Unteransprüchen aufgeführten Maßnahmen sind vorteilhafte Weiterbildungen und Verbesserungen der im Hauptanspruch angegebenen Wischvorrichtung möglich.

## Zeichnung

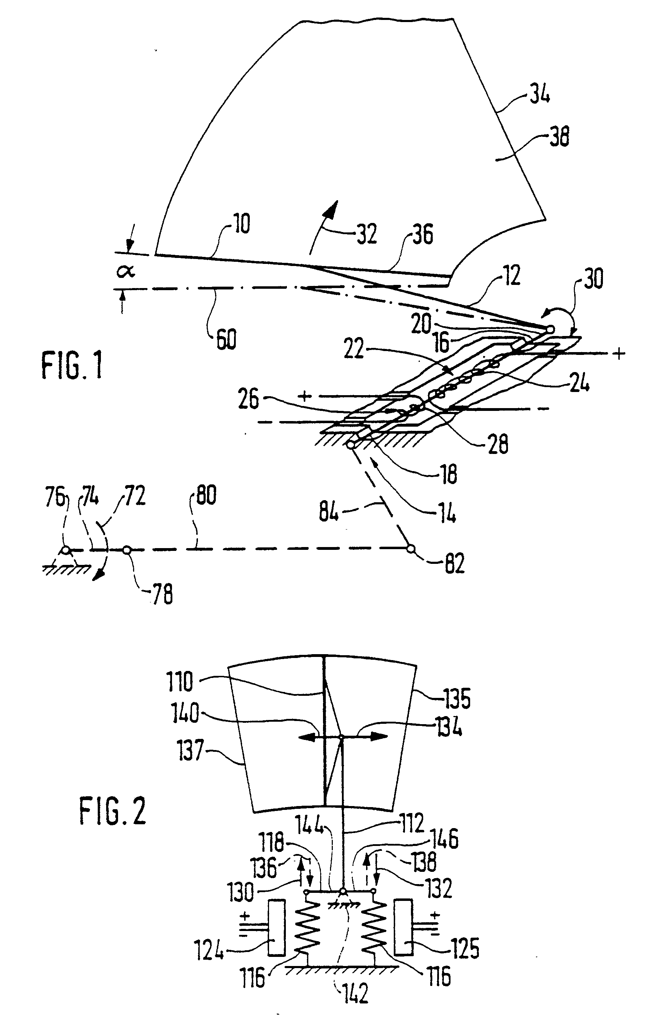

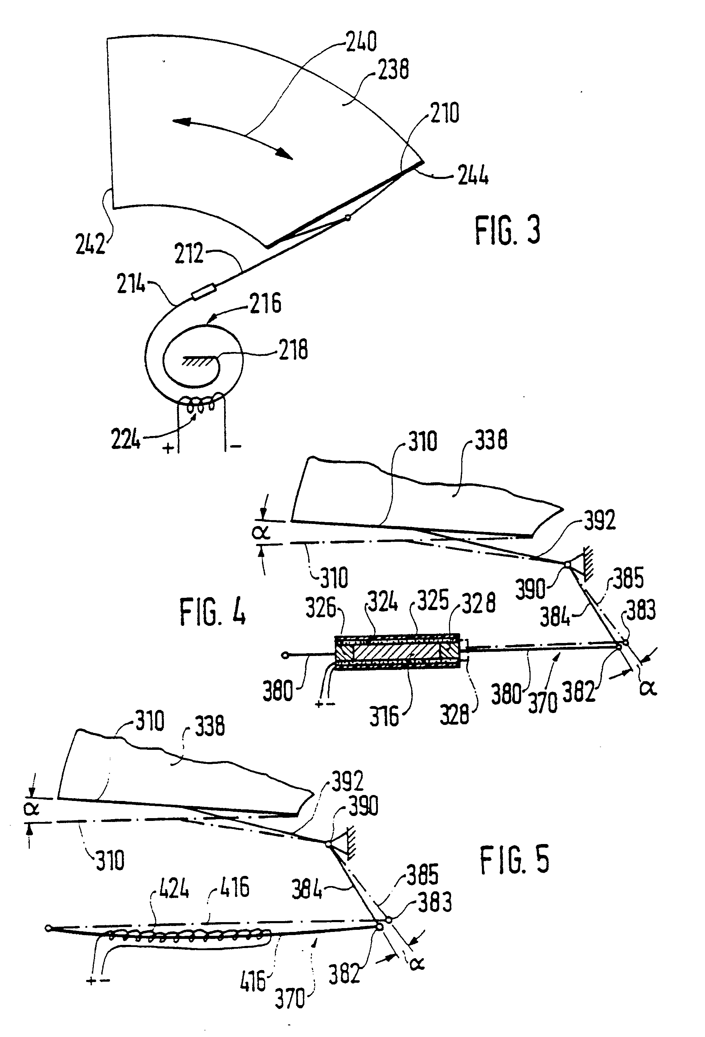

Ausführungsbeispiele der Erfindung sind in der Zeichnung dargestellt und in der nachfolgenden Beschreibung näher erläutert. Es zeigen Figur 1 eine Prinzipdarstellung eines ersten Ausführungsbeispiels der Erfindung, Figur 2 eine Prinzipdarstellung einer anderen Ausführungsform der Erfindung, Figur 3 eine Prinzipdarstellung einer weiteren Ausführungsform der Erfindung, Figur 4 eine weitere Prinzipdarstellung einer erfindungsgemäßen Wischvorrichtung und Figur 5 eine Abwandlung der Wischvorrichtung gemäß Figur 4.

## Beschreibung der Ausführungsbeispiele

Eine in Figur 1 dargestellte Wischvorrichtung für Scheiben von Kraftfahrzeugen hat ein langgestrecktes Wischelement 10, das über einen Wischerarm 12 mit einem Antriebsaggregat 14 verbunden ist. Das Antriebsaggregat 14 weist ein Bauteil 16 auf, welches beim Ausführungsbeispiel gemäß Figur 1 als langgestrecktes, stangenförmiges Torsionselement ausgebildet ist. Das eine Ende 18 des Bauteils 16 ist gestellfest gehalten, während das andere, freie Ende 20 mit dem Wischerarm 12 fest verbunden ist. Das Bauteil 16 ist in einem ersten Abschnitt 22 mit einem Element 24 wirkverbunden, welches derart schaltbar ist, daß es seine Temperatur ändert. Ein zweiter Abschnitt 26 der Torsionsstange 16 ist mit einem zweiten Element 28 wirkverbunden, welches im wesentlichen dem schon beschriebenen Element 24 entspricht. Die Torsionsstange 16 besteht aus einem Material, das als Memory-Legierung oder Formgedächtnis-Legierung bezeichnet wird und dessen Wesen beispielsweise von Dr. Tautzenberger und Prof. Dr. Stöckel in "Wärmebehandlungs- und Werkstofftechnik", Seiten 486 bis 488 beschrieben worden ist. Auf diese Veröffentlichung wird hiermit ausdrücklich Bezug genommen, so daß deren Offenbarung Teil der Offenbarung der vorliegenden Anmeldung wird. Dies gilt auch für die darin aufgelisteten Literaturstellen, von denen hier besonders auf die unter den Positionen 2., 3. und 8. genannten Veröffentlichungen hingewiesen werden soll.

Die Torsionsstange 16 besteht also aus einem Material, das sich unter Einwirkung einer Temperaturänderung aus einer ersten Stellung in eine zweite Stellung verformt. Dabei ist es beim in Rede stehenden Ausführungsbeispiel so ausgelegt, daß die Verformung eine Drehbewegung um die Längsachse der Torsionsstange 16 ergibt. Die Drehbewegung ist in Figur 1 mit einem Doppelpfeil 30 angedeutet. Eine entsprechende Temperaturänderung des Elements 24 hat somit eine Schwenkbewegung des Wischelements 10 auf der zu wischenden Scheibe zur Folge. Mit der Erwärmung des Elements 24 setzt sich das Wischelement 10 in Richtung des Pfeiles 32 in Bewegung, bis es in seiner mit 34 bezeichnete, erste Umkehrstellung gelangt. Danach wird das Element 24 abgekült, so daß es entgegen dem Pfeil 32 in seine in Figur 1 dargestellte, andere Umkehrstellung 36 zurückkehrt. Die sogenannte Ablagestellung des Wischelements 10, in welcher das Wischelement 10 sillgesetzt wird, kann identisch mit der Umkehrstellung 36 sein.

Es ist jedoch auch denkbar; das Wischelement 10 in einer Ablagestellung stillzusetzen,.welche sich außerhalb des von diesem überstrichenen Wischfeldes 38 befindet. Diese ist in Figur 1 strichpunktiert dargestellt und mit 60 bezeichnet. Wenn das zweite Element 28 aktiviert wird, wird das Wischelement 10 aus der in Figur 1 strichpunktiert dargestellten Ablagestellung 60 um einen Winkel α geschwenkt, so daß es in die in Figur 1 mit 36 bezeichnete erste Pendelumkehrstellung gelangt. Durch Aktivieren des anderen Elements 24 wird dann die Wisch ;Pendelbewegung (Pfeil 32) erzeugt. Nach Abschalten des Elements 24 wird das Wischelement 10 in die Stellung 36 zurückgeführt und durch Abschalten des anderen Elements 28 gelangt das Wischelement 10 schließlich in die mit 60 bezeichnete, außerhalb des Wischfelds befindliche Ablagestellung.

Es ist jedoch auch denkbar, die Vorteile der erfindungsgemäßen Wischvorrichtung bei herkömmlichen Scheibenwischvorrichtungen zu nutzen. Eine solche Wischvorrichtung ist ebenfalls in Figur 1 dargestellt, wobei sie mit einem mechanisch arbeitenden Pendelgetriebe 70 ausgestattet ist, welches in Figur 1 mit gestrichelten Linien ergänzend eingefügt ist. Das Pendelgetriebe 70 weist eine in Richtung des Pfeiles 72 umlaufende Kurbel 74 auf, welche an einer Abtriebswelle 76 eines nicht näher dargestellten elektromechanischen Antriebs befestigt ist. Am freien Ende der Kurbel 74 ist über ein Gelenk 78 das eine Ende einer Schubstange 80 angelenkt, deren anderes Ende über ein Gelenk 82 mit einer Schwinge 84 verbunden ist, deren anderes Ende fest mit der Torsionsstange 16 verbunden ist. Bei diesem Ausführungsbeispiel ist natürlich das Ende 18 der Torsionsstange 16 pendelbar gelagert, so daß die Torsionsstange 16 eine Pendelwelle bildet, deren eines Ende mit der Schwinge 84 verbunden ist und deren anderes Ende 20 fest mit dem Wischerarm 12 verbunden ist. Wenn die Kurbel 74 umläuft. wird die Drehbewegung (Pfeil 72) der Abtriebswelle 76 in eine Pendelbewegung umgewandelt, die über die Schwinge 84 auf die als Wischerwelle dienende Torsionsstange 16 übertragen wird. Die Arbeitsbewegung des Wischelements 10 wird also von der Antriebswelle 76 aus auf die Torsionsstange 16 übertragen. Bei einer derart aufgebauten Wischvorrichtung genügt es, wenn lediglich ein Abschnitt, beispielsweise der Abschnitt 26 mit einem Element 28 zusammenwirkt, weil die erfindungsgemäße Ausgestaltung der Wischvorrichtung lediglich zum Überführen des Wischelements 10 in seine Ablagestellung 60 dient. Das andere Element 24 kann also entfallen. Zu der Ausführungsform gemäß Figur 1 ist noch zu sagen, daß die beiden Abschnitte 26 und 22 jeweils für sich temperierbar sind. Es ist somit möglich, Bewegungen auszuführen, die voneinander unabhängig sind. Es ist jedoch aber auch denkbar, der Torsionsstange 16 ein Element zuzuordnen, das mehrere Schaltstufen aufweist, so daß die Torsionsstange verschiedenen Temperaturstufen ausgesetzt werden kann. Auf diese Weise ist es möglich, je nach Schaltstufe, das Torsionselement ganz bestimmte Bewegungen ausführen zu lassen, so daß sich die Anordnung von mehreren Abschnitten 22, 26 an der Torsionswelle 16 und die Zuordnung je eines Elements 24, 28 erübrigt. Stattdessen kann beispielsweise eine erste Temperaturstufe eine Schwenkbewegung um den Winkel α bewirken, während eine zweite Temperaturstufe – je nach Schaltzustand eine Wischbewegung zur Folge hat.

Bei einer zweiten, in Figur 2 dargestellten Ausführungsform der Erfindung ist das aus Memorymetall bestehende Bauteil nach Art einer Schraubenfeder 116 ausgebildet. so daß ohne Schwierigkeiten relativ große Bewegungen ausgeführt werden können. Das Bauteil 116 weist zwei gleichartige Schraubenfedern auf, deren eine Ende gestellfest gehalten sind. Die anderen Enden der Schraubenfedern sind mit einem Querhebel 118 verbunden, in dessen Mittelbereich ein Wischerarm 112 befestigt ist. Am anderen Ende des Wischerarms 112 ist ein Wischelement 110 angebracht. Weiter ist jeder Schraubenfeder 116 ein Element 124, 125 zugeordnet, das seine Temperatur verändert, wenn es entsprechend beeinflußt wird. Durch entsprechende Aktivierung der Elemente 124, 125 können die Schraubenfedern 116 so beeinflußt werden, daß sich die eine Schraubenfeder in Richtung des Pfeiles 130 ausdehnt, während sich das andere Bauteil 116 in Richtung des Pfeiles 132 zusammenzieht. Dadurch ergibt sich eine Bewegung des Wischelements 110 in Richtung des Pfeiles 134, bis das Wischelement 110 in seine eine Umkehrstellung 135 gelangt. Durch gegensinnige Aktivierung der Elemente 124, 125 wird eine Verformung der Schraubenfedern 116 erreicht, welche in Richtung der gestrichelt dargestellten Pfeile 136, 138 erfolgt, so daß das Wischelement 110 in Richtung des Pfeiles 140 bis in die andere Umkehrstellung 137 bewegt wird.

Es ist jedoch auch denkbar, den Querhebel 118 an einem gestellfesten Lager 142 zu führen (in Figur 2 gestrichelt dargestellt), so daß sich zwei Hebelarme 144, 146 ergeben, an welchen jeweils eine der beiden Schraubenfedern 116 angreift. Auf diese Weise wird eine exaktere Führung des Wischelements 110 erreicht.

Bei einer weiteren Ausführungsform, dargestellt in Figur 3, ist das Wischelement 210 über einen Wischerarm 212 mit dem einen, äußeren Ende 214 des aus Memorymetall bestehenden Bauteils 216 verbunden, das in diesem Falle spiralförmig ausgebildet ist. Das innere Ende 218 der Spirale 216 ist gestellfest gehalten. Auch hier ist dem Bauteil 216 ein Element 224 zugeordnet, das seine Temperatur ändert. wenn es entsprechend geschaltet wird. Bei Aktivierung des Elements 224 verändert das Bauteil 216 seine Form derart, daß das Wischelement 210 ein Wischfeld 238 bestreicht, wobei es je nach Art der Temperaturbeeinflussung entsprechend dem Doppelpfeil 240 bewegt wird. Es ist klar, daß mit der gegenläufigen Bewegung auch eine der ursprünglichen Temperatur entgegenlaufende Temperaturänderung einhergeht. Das heißt bei Erwärmung des Bauteils 216 im Bereich des Elements 224 läuft das Wischelement 210 in seine eine Umkehrstellung 242, während bei Abkühlung des Bauteils 216 das Wischelement 210 in seine andere, in Figur 3 dargestellte Pendelumkehrlage 244 gelangt.

Bei der Ausführungsform gemäß Figur 4 wird davon ausgegangen, daß die Wischbewegung des Wischelements 310 über ein Pendelgetriebe 370 erzeugt wird, dessen Aufbau dem des Pendelgetriebes 76, 74, 80, 84 gemäß der in Figur 1 dargestellten Ausführung entspricht. So weist das Pendelgetriebe 370 gemäß der Ausführungsform nach Figur 4 ein als Schubstange ausgebildetes Glied 380 auf, deren eines Ende über ein Gelenk 382 mit einer Schwinge 384 verbunden ist. Die Schwinge selbst ist mit ihrem anderen Ende an einer Wischerwelle 390 befestigt, an welcher der zum Wischelement 310 führende Wischerarm 392 angeordnet ist. Während des Betriebs der Wischvorrichtung wird die von einem nicht dargestellten elektromechanischen Antrieb kommende Antriebsbewegung in die erforderliche Pendelbewegung umgeformt. so daß das Wischelement 310 zwischen zwei Umkehrlagen ein Wischfeld 338 überstreicht. Wenn die Wischvorrichtung jedoch stillgesetzt ist, liegt das Wischelement 310 in einer sogenannten Ablagestellung, die in Figur 4 strichpunktiert dargestellt worden ist. Wenn die Wischvorrichtung eingeschaltet wird, muß also zunächst das Wischelement 310 aus seiner strichpunktiert dargestellten Ablagestellung um den Winkel α geschwenkt werden, damit eine ordnungsgemäße Wisch-Pendelbewegung durch das Pendelgetriebe 370 übertragen werden kann. Dazu ist in der Schubstange 380 ein aus Memorymetall bestehendes Bauteil 316 untergebracht. das sich unter Einwirkung einer Temperaturänderung aus einer ersten in eine zweite Stellung verformt. Auch ist dem Bauteil 316 ein seine Temperatur änderndes, entsprechendes schaltbares Element 324 zugeordnet. In einer zweckmäßigen Ausführungsform ist das Bauteil 316 von dem Element 324 umgeben und das Element 324 ist seinerseits innerhalb eines rohrförmigen Isolierteils 325 angeordnet. Das Bauteil sitzt dabei zwischen zwei Wandteilen 326, 328, die fest mit einander zugewandten Enden der zweiteilig ausgebildeten Schubstange 380 verbunden sind. Die Anordnung der Wandteile 326, 328 ist so getroffen, daß bei einer entsprechenden Temperaturänderung des Elements 324 das Bauteil 316 das Wandteil 328 derart verschiebt, daß dieses aus dem Element 324 etwas heraustritt, wie dies in Figur 4 gestrichelt dargestellt ist. Dadurch wird eine Verlängerung der Schubstange 380 erreicht, so daß das Gelenk 382 in eine mit 383 bezeichnete Stellung gelangt, wobei es die Schwinge 384 in eine mit 385 bezeichnete, strichpunktiert dargestellte Stellung drückt. Gleichzeitig wird natürlich auch das Wischelement 310 aus seiner gezeichneten Pendelumkehrstellung in eine strichpunktiert gezeichnete Ablagestellung geschwenkt, wobei dies ebenfalls einen mit α bezeichneten Winkel überquert.

Die Ausführungsform gemäß Figur 5 entspricht im wesentlichen der eben beschriebenen Ausführungsform, so daß alle in Figur 4 beschriebenen Bauelemente, die bei der Ausführungsform gemäß Figur 5 identisch sind, mit den gleichen Bezugszeichen versehen worden sind. Abweichend von der Ausführungsform gemäß Figur 4 ist lediglich die Ausgestaltung des Bauteils 416. das selbst aus dem sogenannten Memorymetall hergestellt worden ist. Auch bei dieser Ausführungsform ist dem Bauteil 416 ein seine Temperatur änderndes, entsprechend schaltbares Element 424 zugeordnet. Wenn die Wischvorrichtung gemäß Figur 5 stillgesetzt ist, ist das Bauteil 416 gestreckt und nimmt die in Figur 5 strichpunktiert gezeichnete Lage ein. Dabei befinden sich das Gelenk 383 und die Schwinge 385 ebenfalls in der strichpunktiert bezeichneten Stellung, so daß sich das Wischelement 310 in seiner ebenfalls strichpunktiert gezeichneten Ablagestellung befindet. Wenn die Wischvorrichtung arbeiten soll, wird zunächst das Element 424 entsprechend geschaltet, so daß sich das Bauteil 416 derart verformt, daß das Gelenk 383 in seine mit 382 bezeichnete Stellung gelangt. Dabei schwenkt die Schwinge 384 um einen Winkel α, so daß über die Wischerwelle 390 und dem Wischerarm 392 auch das Wischelement 310 in seine Pendel-Umkehrstellung gelangt. Der Betrieb der Wischvorrichtung erfolgt dann wie oben beschrieben.

Das Bauteil 16 bzw. 116 bzw. 216 bzw. 316 bzw. 416 kann beispielsweise aus dem in der obengenannten Literatur erwähnten Memorymetall oder aber auch aus Bimetall gefertigt sein. Für das seine Temperatur ändernde, schaltbare Element wird zweckmäßigerweise ein sogenanntes Peltier-Element verwendet, das sowohl als Heizelement als auch als Kühlelement verwendbar ist. Derartige Elemente sind schon lange zumindest aus der Fachliteratur bekannt und auch schon in Patentschriften, beispielsweise in der DE-PS 189 155 oder in der DE-PS 280 696 beschrieben worden. Es ist aber auch denkbar, daß die Bauteile 16 bzw. 116 bzw. 216 bzw. 316 bzw. 416 durch eine zum Kraftfahrzeug gehörende Klimaanlage eine Temperaturänderung erfahren

Allen Ausführungen ist gemeinsam, daß das Antriebsaggregat der Wischvorrichtung ein Bauteil 16 bzw. 116 bzw. 216 bzw. 316 bzw. 416 aufweist, das sich unter Einwirkung einer Temperaturänderung aus einer ersten in eine zweite Stellung verformt.

Abweichend von den beschriebenen Ausführungsbeispielen kann aber auch beispielsweise der Wischerarm 12 selbst oder auch die Schwinge 384 entsprechend den Merkmalen des Anspruchs 1 ausgebildet werden. Auch können Drehbewegungen von exzentrisch gelagerten Kugelzapfen des Pendelgetriebes 74, 80, 84 durch entsprechende Temperierung von Memorymetall-Bauelementen erreicht werden, so daß durch Verlagerung der Exzentrizität eine Schwenkung des Wischelements um den Winkel erreicht wird.

Es ist klar, daß auch die Ablagestellung 60 in Figur 1 eine Pendel-Umkehrstellung bildet, weil das Wischelement entgegen dem Pfeil 32 in diese Stellung gelangt und dort abgelegt wird. Mit dem Wiedereinschalten der Wischvorrichtung wird das Wischblatt aber in Richtung des Pfeiles 32 bewegt ; es hat also seine Bewegungsrichtung geändert.

## Ansprüche

1. Wischvorrichtung für Scheiben von Kraftfahrzeugen mit einem an der Scheibe angelegten, quer zu seiner Längserstreckung aus einer ersten Umkehrlage in eine andere Umkehrlage bewegbaren Wischelement, das mit einem dessen Bewegung bewirkenden Antriebsaggregat verbunden ist, dadurch gekennzeichnet, daß das Antriebsaggregat zumindest ein Bauteil (16 bzw. 116 bzw. 216 bzw. 316 bzw. 416) aufweist. das sich unter Einwirkung einer Temperaturänderung aus einer ersten in eine zweite Stellung derart verformt, daß das Wischelement (10 bzw. 110 bzw. 210 bzw. 310) aus einer ersten Umkehrlage (34 bzw. 135 bzw. 242) in seine andere Umkehrlage (36 bzw. 137 bzw. 244 bzw. 60) gelangt.

2. Wischvorrichtung nach Anspruch 1, dadurch gekennzeichnet. daß dem Bauteil (16 bzw. 116 bzw. 216 bzw. 316 bzw. 416) ein seine Temperatur änderndes, entsprechend schaltbares Element (24 bzw. 26 bzw. 124 bzw. 224 bzw. 324 bzw. 424) zugeordnet ist.

3. Wischvorrichtung nach einem der Ansprüche 1 oder 2, dadurch gekennzeichnet, daß das Bauteil als langgestrecktes Torsionselement (16) ausgebildet ist, dessen eines Ende (18) gestellfest gehalten und mit dessen anderem, freien Ende (20) das Wischelement (10) verbunden ist.

4. Wischvorrichtung nach einem der Ansprüche 1 oder 2, dadurch gekennzeichnet. daß das Bauteil nach Art einer Schraubenfeder (116) ausgebildet, einseitig gestellfest abgestützt und mit seinem anderen Ende mit dem Wischelement (110) verbunden ist.

5. Wischvorrichtung nach Anspruch 4, dadurch gekennzeichnet. daß ein mit dem Wischelement (110) verbundener Wischerarm (112) an seinem vom Wischelement abgewandten Ende mit einem Querhebel (118) verbunden ist, an welchem das Bauteil (116) angreift.

6. Wischvorrichtung nach Anspruch 5, dadurch gekennzeichnet, daß der Querhebel (118) zwei Hebelarme (146, 144) aufweist und daß an jedem Hebelarm ein schraubenfederartiges Bauteil (116) angreift. wobei jedem Bauteil (116) ein seine Temperatur änderndes, entsprechend schaltbares Element (124, 125) zugeordnet ist.

7. Wischvorrichtung nach Anspruch 6, dadurch gekennzeichnet, daß die Temperaturänderung der beiden Bauteile (116) gegensinnig erfolgt.

8. Wischvorrichtung nach einem der Ansprüche 5 bis 7, dadurch gekennzeichnet, daß der Querhebel (118) pendelbar an einem gestellfesten Lager (142) geführt ist.

9. Wischvorrichtung nach einem der Ansprüche 1 oder 2, dadurch gekennzeichnet, daß das Bauteil spiralförmig ausgebildet ist, daß das eine Ende (218) der Spirale (216) gestellfest gehalten ist und daß mit dem anderen Ende (214) der Spirale das Wischelement (210) verbunden ist.

10. Wischvorrichtung nach Anspruch 9. dadurch gekennzeichnet. daß das Wischelement (210) an dem äußeren Ende (214) der Spirale (216) befestigt ist.

11. Wischvorrichtung nach einem der Ansprüche 1 oder 2, bei der das Antriebsaggregat einen Pendelantrieb mit einem Elektromotor und einem Pendelgetriebe (370) aufweist. dadurch gekennzeichnet. daß ein Glied (380) des Pendelgetriebes (370) mit dem Bauteil (316) versehen ist.

12. Wischvorrichtung nach Anspruch 11, dadurch gekennzeichnet, daß das Bauteil (316 bzw. 416) in das Glied (380 bzw. 416) des Pendelgetriebes (370) integriert ist.

13. Wischvorrichtung nach Anspruch 3, dadurch gekennzeichnet, daß das Torsionselement (16) zwei beschnitte (22, 26) aufweist. von denen jeder vom anderen beschnitt (26 bzw. 22) unabhängig temperierbar ist.

14. Wischvorrichtung nach Anspruch 3, daß das seine Temperatur ändernde, schaltbare Element (24 bzw. 26) mehrere Einschaltstufen aufweist.

15. Wischvorrichtung nach einem der Ansprüche 1 oder 2, bei der das Antriebsaggregat einen Pendelantrieb mit einem Elektromotor und einem Pendelgetriebe (74, 80, 84) aufweist und die Pendelbewegung auf eine das Wischelement (10) tragende, pendelbar gelagerte Wischerwelle (16) übertragen wird. dadurch gekennzeichnet, daß die Wischerwelle (16) zumindest abschnittsweise als sich unter Einwirkung einer Temperaturänderung aus einer ersten in eine zweite Stellung verformbares Bauteil ausgebildet ist.

16. Wischvorrichtung nach einem der Ansprüche 1 bis 15, dadurch gekennzeichnet, daß das Bauteil (16 bzw. 116 bzw. 216 bzw. 316 bzw. 416) wenigstens teilweise aus Bimetall gefertigt ist.

17. Wischvorrichtung nach einem der Ansprüche 1 bis 15, dadurch gekennzeichnet, daß das Bauteil (16 bzw. 116 bzw. 216 bzw. 316 bzw. 416) wenigstens teilweise aus sogenanntem Memorymetall gefertigt ist

18. Wischvorrichtung nach einem der Ansprüche 2 bis 17, dadurch gekennzeichnet, daß das seine Temperatur ändernde. schaltbare Element (24 bzw. 28 bzw. 124 bzw. 224 bzw. 324 bzw. 424) ein Peltier-Element ist.

## Claims

1. Wiping device for windows of motor vehicles, with a wiping element which is laid against the window and is movable transversely relative to its longitudinal extension out of a first reversal position into another reversal position and which is connected to a drive assembly causing it to move, characterised in that the drive assembly has at least one component (16 or 116 or 216 or 316 or 416) which is deformed out of a first position into a second position under the effect of a temperature change, in such a way that the wiping element (10 or 110 or 210 or 310) moves out of a first reversal position (34 or 135 or 242) into its other reversal position (36 or 137 or 244 or 60).

2. Wiping device according to Claim 1, characterised in that the component (16 or 116 or 216 or 316 or 416) is assigned an appropriately switchable element (24 or 26 or 124 or 224 or 324 or 424) changing its temperature.

3. Wiping device according to one of Claims 1 or 2, characterised in that the component is designed as an elongate torsion element (16), one end (18) of which is held fixed to the framework and to the other free end (20) of which the wiping element (10) is connected.

4. Wiping device according to one of Claims 1 or 2, characterised in that the component is designed in a manner of a helical spring (116), is supported affixed to the framework at one end and is connected to the wiping element (110) at its other end.

5. Wiping device according to Claim 4, characterised in that a wiper arm (112) connected to the wiping element (110) is connected at its end facing away from the wiping element to a transverse lever (118), on which the component (116) engages.

6. Wiping device according to Claim 5, characterised in that the transverse lever (118) has two lever arms (146, 144), and in that a component (116) resembling a helical spring engages on each lever arm, each component (116) being assigned an appropriately switchable element (124, 125) changing its temperature.

7. Wiping device according to Claim 6, characterised in that the temperature change of the two components (116) takes place in opposite directions.

8. Wiping device according to one of Claims 5 to 7, characterised in that the transverse lever (118) is guided so as to be capable of executing a pendulum movement on a bearing (142) fixed to the framework.

9. Wiping device according to one of Claims 1 or 2, characterised in that the component has a spiral design, in that one end (218) of the spiral (216) is held fixed to the framework, and in that the wiping element (210) is connected to the other end (214) of the spiral.

10. Wiping device according to Claim 9, characterised in that the wiping element (210) is fastened to the outer end (214) of the spiral (216).

11. Wiping device according to one of Claims 1 or 2, in which the drive assembly has a pendulum drive with an electric motor and with a pendulum mechanism (370), characterised in that a member (380) of the pendulum mechanism (370) is equipped with the component (316).

12. Wiping device according to Claim 11, characterised in that the component (316 or 416) is incorporated in the member (380 or 416) of the pendulum mechanism (370).

13. Wiping device according to Claim 3, characterised in that the torsion element (16) has two portions (22, 26), each of which can be temperature-controlled independently of the other portion (26 or 22).

14. Wiping device according to Claim 3, characterised in that the switchable element (24 or 26) changing its temperature has a plurality of switch-on steps.

15. Wiping device according to one of Claims 1 or 2, in which the drive assembly has a pendulum drive with an electric motor and with a pendulum mechanism (74, 80, 84) and the pendulum movement is transmitted to a wiper shaft (16) carrying the wiping element (10) and mounted so as to be capable of executing a pendulum movement, characterised in that the wiper shaft (16) is designed at least in portions as a component deformable out of a first position into a second position under the effect of a temperature change.

16. Wiping device according to one of Claims 1 to 15, characterised in that the component (16 or 116 or 216 or 316 or 416) is produced at least partially from bimetal.

17. Wiping device according to one of Claims 1 to 15, characterised in that the component (16 or 116 or 216 or 316 or 416) is produced at least partially from so-called memory metal.

18. Wiping device according to one of Claims 2 to 17, characterised in that the switchable element (24 or 28 or 124 or 224 or 324 or 424) changing its temperature is a Peltier element.

## Revendications

1. Dispositif d'essuie-glace pour les pare-brise de véhicules automobiles, comportant un essuie-glace appliqué contre le pare-brise et qui est mobile entre une première position d'inversion et une seconde position d'inversion, dans une direction transversale à son extension longitudinale, cet essuie-glace étant relié à un dispositif d'entraînement qui crée ce mouvement, dispositif d'essuie-glace caractérisé en ce que le dispositif d'entraînement comporte au moins un composant (16, 116, 216, 316, 416) qui, soumis à l'action d'une variation de température, se déforme d'une première position vers une deuxième position pour que l'essuie-glace (10, 110, 210, 310) passe d'une première position d'inversion (34, 135, 342) dans une autre position d'inversion (36, 137, 244, 60).

2. Dispositif d'essuie-glace selon la revendication 1, caractérisé en ce qu'un élément de commutation approprié (24, 26, 124, 224, 324, 424) modifiant sa température est associé au composant (16, 116, 216, 316, 416).

3. Dispositif d'essuie-glace selon l'une des revendications 1 ou 2, caractérisé en ce que le composant est un élément de torsion (16) allongé, dont une extrémité (18) est maintenue solidairement du support et dont l'autre extrémité (20) libre est reliée au balai (10).

4. Dispositif d'essuie-glace selon l'une des revendications 1 ou 2, caractérisé en ce que le composant est en forme de ressort hélicoïdal (116) dont une extrémité s'appuie solidairement au support et dont l'autre extrémité est reliée à l'essuie-glace (110).

5. Dispositif d'essuie-glace selon la revendication 1, caractérisé en ce qu'un bras (112) relié à l'essuie-glace (110) est lui-même relié par son extrémité opposée à celui de l'essuie-glace, à un levier transversal (118) soumis à l'action du composant (116).

6. Dispositif d'essuie-glace selon la revendication 5, caractérisé en ce que le levier transversal (118) comporte deux bras de levier (146, 144) et un composant (116) est reliée à chaque bras de levier, un élément de commutation (124, 125) de température variable étant associé à chaque composant (116).

7. Dispositif d'essuie-glace selon la revendication 6, caractérisé en ce que la variation de température des deux composants (116) se fait en sens opposé.

8. Dispositif d'essuie-glace selon l'une des revendications 5 à 7, caractérisé en ce que le levier transversal (118) est guidé de manière pendulaire sur un palier (142) solidaire du support.

9. Dispositif d'essuie-glace selon l'une des revendications 1 ou 2, caractérisé en ce que le composant est en forme de spirale et une extrémité (218) de la spirale (216) est maintenue solidaire du support et l'autre extrémité (214) de la spirale est reliée à l'essuie-glace (210).

10. Dispositif d'essuie-glace selon la revendication 9, caractérisé en ce que l'essuie-glace (210) est fixé à l'extrémité extérieure (214) de la spirale (216).

11. Dispositif d'essuie-glace selon l'une des revendications 1 ou 2 dont le dispositif d'entraînement comporte un entraînement pendulaire avec un moteur électrique et une transmission pendulaire (370), caractérisé en ce que l'élément (380) de la transmission pendulaire (370) est muni du composant (316).

12. Dispositif d'essuie-glace selon la revendication 11, caractérisé en ce que le composant (316, 416) est intégré à l'élément (380, 416) de la transmission pendulaire (370).

13. Dispositif d'essuie-glace selon la revendication 3, caractérisé en ce que l'élément de torsion (16) comporte deux segments (22, 26) dont chacun est susceptible d'être mis en température indépendamment de l'autre segment (26, 22).

14. Dispositif d'essuie-glace selon la revendication 3, caractérisé en ce que l'élément de commutation (24, 26) dont la température varie présente plusieurs niveaux de commutation.

15. Dispositif d'essuie-glace selon l'une des revendications 1 ou 2 dont le dispositif d'entraînement comprend un entraînement pendulaire avec un moteur électrique et une transmission pendulaire (74, 80, 84), le mouvement pendulaire étant transmis à un axe (16) à montage pendulaire, portant l'essuie-glace (10), dispositif caractérisé en ce que l'axe (16) est au moins réalisé par segment sous la forme d'un composant qui se déforme entre une première et une seconde position sous l'action d'une variation de température.

16. Dispositif d'essuie-glace selon l'une des revendications 1 à 15, caractérisé en ce que le composant (16, 116, 216, 316, 416) est réalisé au moins partiellement en bimétal.

17. Dispositif d'essuie-glace selon l'une des revendications 1 à 15, caractérisé en ce que le composant (16, 116, 216, 316, 416) est réalisé au moins partiellement en un métal à mémoire.

18. Dispositif d'essuie-glace selon l'une des revendications 2 à 17, caractérisé en ce que l'élément (24, 28, 124, 224, 324, 424) commutable, dont la température varie, est un élément à effet de Peltier.

FIG.1

FIG.2

FIG. 3

FIG. 4

FIG. 5